# EUROPÄISCHE PATENTSCHRIFT

(11) **EP 3 309 051 B1**
(45) Veröffentlichungstag und Bekanntmachung des Hinweises auf die Patenterteilung: **17.06.2020**
(21) Anmeldenummer: 17204030.5
(22) Anmeldetag: 18.04.2013
(51) Int. Cl.: B62K 27/12, B60D 1/02, B60D 1/52

(54) **SELBSTVERRIEGELNDE KOMPAKT-KUPPLUNG**
SELF-LOCKING COMPACT COUPLING
EMBRAYAGE COMPACT À VERROUILLAGE AUTOMATIQUE

(30) Priorität: 18.04.2012 DE 102012103404
(43) Veröffentlichungstag der Anmeldung: 18.04.2018
(62) Teilanmeldung aus: 13721611.5
(73) Patentinhaber: Croozer GmbH, 50354 Hürth (DE)
(72) Erfinder: Bossel, Derk, 34289 Zierenberg (DE)
(74) Vertreter: Lenzing Gerber Stute

(56) Entgegenhaltungen:
- EP-A1- 2 386 473
- WO-A1-98/21057
- WO-A1-2010/105286
- CN-Y- 2 294 913
- DE-A1- 4 427 036
- DE-A1- 19 609 910
- DE-U1- 9 308 490
- GB-A- 2 266 869
- US-A- 5 470 088
- US-B1- 7 131 657
- US-E- R E26 806

## Beschreibung

Die Erfindung betrifft eine Kupplung zum Verbinden eines mindestens eine Deichsel aufweisenden Anhängers mit einem nicht motorisierten Fahrzeug oder einem lediglich einen Hilfsantrieb aufweisenden Fahrzeug, insbesondere einem Fahrrad bzw. einem Pedelec, mit zwei zusammenwirkenden und voneinander lösbaren Kupplungsteilen, von denen das eine ortsfest mit dem Fahrzeug und das andere mit der Deichsel verbunden ist.

Kupplungen zum Verbinden der Deichsel eines Fahrradanhängers mit einem Fahrrad sind hinlänglich bekannt. Üblicherweise werden sie entweder zentral unterhalb des Sattels am Fahrradrahmen oder an der Sattelstütze oder seitlich an der Hinterradgabel aus Kettenstrebe und Sitzstrebe bzw. direkt am Hinterrad des Fahrrades befestigt.

So ist aus der DE 299 09 176 U1 eine Anhängerkupplung mit einem an einem Fahrradrahmen unterhalb des Sattels zu befestigenden Kugelkopf bekannt, der in einen am vorderen Ende einer Deichsel vorgesehenen Kupplungskörper eingeführt werden kann. Der Kugelkopf wird in einer Kugelpfanne im Kupplungskörper durch ein sogenanntes Sicherungsrohr gehalten, das sich mithilfe einer sich am Deichselende abstützenden Feder über den Kupplungskörper schiebt. Zum Einsetzen des Kugelkopfes in den Kupplungskörper bzw. zum Lösen des Kugelkopfes aus dem Kupplungskörper ist das Sicherungsrohr entgegen der Federkraft in Richtung zum Fahrradanhänger zurückzuschieben, so dass die Kugelpfanne im Kupplungskörper frei zugänglich ist. Derartige Kupplungen haben unter anderem den grundsätzlichen Nachteil, dass der Gepäckträger des Fahrrads nicht mehr oder zumindest nur sehr beschränkt nutzbar ist, da die Deichsel über den Gepäckträger geführt wird. Ein weiterer grundsätzlicher Nachteil besteht in dem relativ hohen Krafteinleitungspunkt, der beim Schieben des Anhängers das Hinterrad des Fahrrads erheblich entlastet und das Fahrrad auch aushebeln kann.

Einen bedeutsamen praktischen Nachteil haben zudem alle Kupplungen, die am Sattelrohr in Höhe der Sitzstreben anzubringen sind, da durch die Vielzahl von unterschiedlichen Rahmenformen und -bauweisen eine sichere und einfache Montage solcher Kupplungen häufig nicht gelingt.

Aus der DE 196 09 910 A1 ist eine Kupplung zum seitlichen Anhängen eines Fahrradanhängers mit einer Seitendeichsel an einem Fahrradrahmen bekannt, die ein Deichselanschlussteil und ein damit lösbar verbundenes Fahrradanschlussteil aufweist. Das Deichselanschlussteil ist im eingekuppelten Zustand in mindestens drei Drehachsen gelenkig mit dem Fahrradanschlussteil verbunden. Die Kupplung ist als Steckkupplung ausgebildet. Sie weist eine Kupplungsbuchse als erstes, zum Deichselanschlussteil gehöriges Kupplungsteil auf. In der Kupplungsbuchse sind federelastische Zungen mit Rastnasen angeordnet. Damit zusammen wirkt ein Bolzenstück als zweites Kupplungsteil, das Bestandteil des Fahrradanschlussteils ist. Das Bolzenstück kann axial in die Kupplungsbuchse eingeschoben werden, bis dass die Rastfedern in eine umlaufende Nut des Bolzenstücks eingreifen. Das Bolzenstück ist in der Buchse frei drehbar gelagert. Das Fahrradanschlussteil weist zwei weitere Drehgelenke auf, von denen ein erstes an einem abgewinkelten Ende eines an der Kettenstrebe und der Sitzstrebe eines Fahrradrahmens befestigten Anschlussstücks angeordnet ist. Das zweite Drehgelenk sitzt zwischen dem ersten Drehgelenk und der Kupplung und ist mit dem ersten Drehgelenk über ein Versatzstück verbunden. Nachteilig an dieser Kupplung sind der vergleichsweise hohe Aufwand zum Befestigen der Kupplung am Fahrradrahmen und die vergleichsweise hohe, am Fahrrad auch im anhängerfreien Betrieb mitzuführende Masse. Des Weiteren nachteilig sind Drehmomente, die bauartbedingt durch Schub- und Zugbewegungen auf die Befestigungsplatte der fahrradseitigen Kupplung wirken, welche in ungünstigen Fällen zu einem Lösen der Befestigungsmittel führen können, welche die Befestigungsplatte am Fahrrad fixieren.

Aus der US 6,099,088 ist eine weitere Anhängerkupplung für einen Fahrradanhänger bekannt. Sie weist ein am Ende einer Schnellspannnabe angeordnetes, am Schnellspanner fest verbundenes erstes Kupplungsbefestigungsteil, das mit einem Wälzlager auf dem ersten Kupplungsbefestigungsteil gelagert und um die Längsachse der Nabe rotierbar ist, sowie ein darauf angeordnetes zweites Kupplungsbefestigungsteil auf, welches eine Aufnahme für einen Steckbolzen hat. Auch das kupplungsseitige Ende der Deichsel weist eine damit zusammenwirkende Aufnahme für den Steckbolzen auf. Zur Verbindung der Deichsel mit dem zweiten Kupplungsbefestigungsteil wird der Bolzen radial zur Nabenachse in die Aufnahmen eingesetzt. Die Deichsel ist dann um die Bolzenachse herum verschwenkbar. Der Bolzen wird in der Aufnahme mit Hilfe einer Sicherungsfeder gesichert. Die Kupplung ist ausschließlich für Schnellspannaben konzipiert und nicht für Fahrräder mit Vollachsen einsetzbar.

Aus der CN 2 294 913 Y ist eine Kupplung der eingangs genannten Art bekannt. Sie weist einen Bolzen mit zylindrischer Mantelfläche sowie einer auf den Bolzen aufsteckbaren und den Bolzen zumindest teilweise umgreifenden Buchse als zusammenwirkende Kupplungsteile auf, wobei die Buchse mindestens eine Öffnung zum Einsetzen des Bolzens aufweist und die miteinander verbundenen Kupplungsteile um ihre gemeinsame Längsachse herum relativ zueinander drehbar sind und als Drehgelenk mit einem Freiheitsgrad wirken. Als Verriegelungsmittel weisen die Kupplungsteile einen Schieber, der an der Buchse federnd gelagert ist, sowie eine am Bolzen ausgebildete umlaufenden Nut auf, wobei eine Stirnseite des Bolzens kegelförmig ausgebildet ist, so dass der Schieber beim Einsetzen des Bolzens in die Buchse zunächst von der Stirnseite des Bolzens entgegen einer Federkraft bei Seite geschoben wird und dann aufgrund der Federkraft in der umlaufenden Nut einrastet.

Aus der US RE 26,806 E ist außerdem eine Kupplung bekannt, bei der auf einen an einem Fahrrad montierten, querstehenden Bolzen ein Buchsenstück aufgesetzt wird. Das Buchsenstück wird auf dem Bolzen durch ein zweites Buchsenstück gesichert. Hierfür sind im zweiten Buchsenstück und im Bolzen Bohrungen vorgesehen sind, in die ein Sicherungssplint eingesetzt werden kann.

Bei beiden der zuletzt genannten Kupplungen sind deichselseitig zwei weitere Drehgelenke zum Erzeugen zweier weiterer Freiheitsgrade vorgesehen.

Die DE 44 27 038 A1 ist eine Vorrichtung zum lösbaren Verbinden eines Fahrradanhängers mit einem Fahrrad bekannt, die eine Kugel mit zwei Gelenkteilen in Form einer Kugel und eines die Kugel unlösbar aufnehmenden kugelförmigen Kugelkäfigs erreicht, wobei ein Gelenkteil ein mit einem Gegenstück in Steckverbindung bringbares und hiermit mittels eines zu Sperrelements festlegbaren Steckelements aufweist, und wobei das andere Gelenkteil an einem zugeordneten Halter befestigt ist. Als Sperreelement wird ein Bügelschloss gezeigt, mit dem das Steckelement fest mit einer Deichsel verbunden wird.

Schließlich ist aus der WO 98/21057 eine längliche Kupplung zwischen einem Zugfahrzeug und einem Anhänger bekannt, die ein erstes, ein zweites und ein drittes Gelenk aufweist, die eine Bewegung über drei zueinander orthogonale Achsen ermöglicht. Das erste und das zweite Gelenk bilden ein Kardangelenk. Beide Gelenke werden jeweils mit einem Bolzen gebildet, der jeweils drehbar in einer durch zwei miteinander fluchtende Durchgangslöcher gebildeten Führung sitzt. Einer der beiden Bolzen ist gegen ein Herausrutschen aus der Führung durch ein Bügelschloss an seinem durch die Führung hindurchgesteckten Ende gesichert.

Die Aufgabe der Erfindung besteht darin, eine Kupplung der eingangs genannten Art zur Verfügung zu stellen, die die oben genannten Nachteile nicht aufweist.

Diese Aufgabe wird bei einer Kupplung der eingangs genannten Art mit den Merkmalen des Anspruchs 1 gelöst.

Unter einem ortsfesten Kupplungsteil wird hier und im Folgenden ein solches verstanden, das seine Position gegenüber dem Fahrzeugrahmen nicht verändert. Hierdurch wird jedoch nicht ausgeschlossen, dass der ortsfeste Kupplungsteil um seine Längsachse drehbar gelagert sein kann.

Unter einer Buchse wird hier und im Folgenden ein Bauteil verstanden, dass geeignet ist, den Bolzen im gekoppelten Zustand in Bezug auf die Lage seiner Längsachse sicher aufzunehmen. Sie kann den Bolzen teilweise ummanteln, aber auch lediglich aus zwei oder mehreren, axial zueinander beabstandeten, ringförmigen Einfassungen für den Bolzen bestehen. Sie kann so ausgebildet sein, dass darin auch Verriegelungsmittel zum Sichern des Bolzens in der Buchse untergebracht sind.

Das ortsfeste Kupplungsteil kann sowohl der Bolzen als auch die Buchse zur Aufnahme des Bolzens sein. Bei beiden Elementen besteht der besondere Vorteil darin, dass sie auf einfache Weise beispielsweise im Bereich des Ausfallendes eines Fahrradrahmens oder am Ende einer Radachse befestigt, beispielsweise verschraubt, werden können, sofern sie entsprechende Außen- oder Innengewinde haben, die wahlweise mit dem Gewinde am Ende einer Radachse oder einer am Ausfallende gegengelagerten Schraube zusammenwirken.

Der Bolzen der erfindungsgemäßen Kupplung kann, je nach Ausführungsform, beispielsweise axial oder radial zur Längsachse der Buchse in diese eingesetzt werden. Dabei sorgen in einer bevorzugten Ausführungsform die Verriegelungsmittel dafür, dass der Bolzen automatisch in der Buchse sicher festgehalten wird, sobald er beim Einsetzen eine bestimmte Position erreicht hat. Ist der Bolzen in die Buchse eingesetzt und mit den Verriegelungsmitteln verriegelt, sind Bolzen und Buchse um ihre Längsachse herum relativ beweglich, so dass der durch Bolzen und Buchse gebildete Teil der Kupplung einen Freiheitsgrad hat.

Durch ein weiteres, deichselseitiges Gelenk, das insbesondere ein kardanisches Gelenk sein kann, wird gewährleistet, dass alle Bewegungen der Deichsel von der Kupplung aufgenommen werden können.

Ein wesentlicher Vorteil der erfindungsgemäßen Kupplung besteht darin, dass nur ein Minimum an Kupplungsteilen - in bevorzugter Ausführung nur ein einziges Bauteil - am Fahrzeug verbleibt, wenn die Kupplung einmal gelöst ist. So erfolgt die Auftrennung der Kupplung an der Stelle der Bereitstellung ihres - vom Fahrzeug aus gesehen - ersten Freiheitsgrades. Dies ist insbesondere ein großer Vorteil gegenüber der aus der DE 196 09 910 A1 bekannten Kupplung, bei der nahezu alle für die mit der Kupplung bereitgestellten drei Freiheitsgrade notwendigen Kupplungsteile am Fahrzeug verbleiben, selbst wenn die Kupplung gelöst ist. Dies ist aber auch ein Vorteil gegenüber der aus der US 6,099,008 bekannten Kupplung, bei der die Auftrennung der Kupplung an ihrem - vom Fahrrad aus gezählt - zweiten Freiheitsgrad erfolgt.

Vorzugsweise wird das fahrzeugseitige Kupplungsteil axial zur Achse der Radnabe angeordnet, und es weist darüber hinaus bevorzugt Mittel zu seiner Befestigung am Ende einer Radnabe auf. Diese Mittel können vorteilhafterweise darin bestehen, dass die Buchse ein Innengewinde oder der Bolzen in Richtung seiner Längsachse eine Gewindebohrung aufweist, mit dem die Buchse bzw. der Bolzen auf ein Ende der Radnabe oder eine am Fahrzeug gegengelagerte Verbindungsschraube aufgeschraubt werden kann. Hier wird ein weiterer grundsätzlicher Vorteil der Erfindung deutlich. So kann durch die relative Beweglichkeit zwischen Bolzen und Buchse kein Drehmoment auf das fahrzeugseitige Kupplungsteil aufgebracht werden. Deswegen kann es wahlweise neben einer Radmutter auf das Ende der Radachse aufgeschraubt werden oder sogar die Funktion des Radbefestigungsmittels, sei es als Radmutter bei Vollachsen oder als Gegenmutter bei Schnellspannachsen, übernehmen.

Weist das fahrzeugseitige Kupplungselement eine ausreichende Dicke auf, kann es vergleichsweise kurz ausgeführt werden, so dass es kaum über das Ausfallende des Fahrzeugrahmens auskragt.

Insbesondere bei erfindungsgemäßen Kupplungsteilen, die axial ineinander zu stecken sind, ist es von Vorteil, wenn der Bolzen spielfrei in der Buchse sitzt, da damit eine Kraftübertragung zwischen Bolzen und Buchse über eine größtmögliche Kontaktfläche erfolgt.

Als Befestigungsmittel für eine Vollachse bzw. Gegenmutter eines Schnellspanners kann der Bolzen zudem weitere vorteilhafte Ausgestaltungen aufweisen. So kann der Bolzen z.B. auf dem von der Buchse umhüllten Zylinderstück mindestens zwei zueinander parallele Flächen aufweisen, welche eine Ansatzfläche für ein Werkzeug bilden, mit denen der Bolzen aufgeschraubt werden kann. Im verriegelten Zustand ist es danach nicht mehr möglich, den Bolzen abzuschrauben, wodurch eine einfache, aber wirksame Diebstahlsicherung erreicht wird. Auch kann der Bolzen an der Stirnfläche, an der sich das Innengewinde befindet, einen zylindrischen Abschnitt aufweisen, der als Abstandhalter fungiert, wenn die Radachse sich in sogenannten 3-D Ausfallenden befindet, welche eine Vertiefung aufweisen, in die das Radbefestigungsmittel hineinragt. So ist gewährleistet, dass der Bolzen sicher und beschädigungsfrei auch in räumlich beengten Verhältnissen montiert werden kann.

Auch vorteilhaft kann eine spezielle Ausgestaltung der den Bolzen aufnehmenden Stirnfläche der Buchse sein, bei der sie eine axial ausgeformte Manschette aufweist, die im aufgesteckten und verriegelten Zustand die Montageflächen des Bolzens soweit überdeckt, dass der Ansatz eines Werkzeuges zum Demontieren des Bolzens nicht mehr möglich ist.

Die Kupplungsteile sind im gekoppelten Zustand axial zueinander fixiert. Dies wird bei einer ersten Ausführungsform der beanspruchten Erfindung dadurch bewirkt, dass eines der Kupplungsteile mindestens eine zumindest teilweise umlaufende Schulter oder Nut aufweist, die mindestens eine erste axial wirkende Lagerfläche bildet, und am anderen Kupplungsteil ein mit der ersten axial wirkenden Lagerfläche zusammenwirkendes Gegenlager vorgesehen ist. Das Gegenlager ist dann erfindungsgemäß ein mit dem anderen Kupplungsteil zusammenwirkendes Verriegelungsmittel.

Das Verriegelungsmittel bildet vorzugsweise nicht nur eine axial wirkende Lagerfläche sondern mindestens zwei axial wirkende Lagerflächen als Gegenlager und sperrt damit in Zusammenwirken mit entsprechenden axial wirkenden Lagerflächen des einen Kupplungsteils eine Bewegung des Bolzens in der Buchse in beide axiale Richtungen. Es ist auf diese Weise möglich, beide Kupplungsteile axial in beide Richtungen zu fixieren. Die Lagerflächen liegen dabei vorzugsweise innerhalb der Buchse oder Bolzenführung, wenn der Bolzen in die Buchse bzw. Bolzenführung eingesteckt ist, so dass eine kompakte Bauweise der Kupplung möglich ist.

In einer konstruktiv einfachen und daher bevorzugten Ausführungsform der Erfindung ist in der Buchse für einen Sicherungsstift eine Führung derart vorgesehen, dass der in der Führung sitzende Sicherungsstift in eine Nut eines in die Buchse eingesetzten Bolzens eingreift und ihn als Gegenlager gegen ein axiales Herausrutschen aus der Buchse sichert. Dabei kann die Buchse in einer darüber hinaus bevorzugten Ausführungsform seitensymmetrisch aufgebaut sein, indem die Führung für den Sicherungsstift mittig in der Buchse angeordnet ist. Damit ist ein Aufstecken der Buchse auf den Bolzen von beiden Stirnseiten der Buchse her möglich.

In einer in der Handhabung vereinfachten zweiten Ausführungsform der beanspruchten Erfindung sind die Verriegelungsmittel so ausgebildet, dass sie beim Aufstecken der Buchse auf den Bolzen automatisch einrasten und die Kupplungsteile sicher miteinander verbinden. Des Weiteren sind Entriegelungsmittel vorgesehen, um die Verriegelungsmittel zu entriegeln, so dass die Kupplungsteile voneinander gelöst werden können. Die erfindungsgemäße Kupplung ist somit als Steckkupplung ausgebildet, die aufgrund der automatisch einrastenden Verriegelungsmittel automatisch geschlossen ist, ohne dass es weiterer Handgriffe bedarf. Damit können, anders als bei der aus der US 6,099,008, die Kupplungsteile weitestgehend einhändig und mittels eines Handgriffs miteinander verbunden werden.

Hierfür kann das Gegenlager vorzugsweise ein federelastisches Element und/oder federnd gelagert sein und als automatisch einrastendes Verriegelungsmittel wirken. So kann das Gegenlager beispielsweise durch federnd gelagerte Rastnasen ausgebildet sein, die mit einem der Kupplungsteile fest verbunden sind und die in gekoppeltem Zustand in eine zumindest teilweise umlaufende Nut im anderen Kupplungsteil eingreifen.

Ist im Bolzen eine zumindest teilweise umlaufende Nut vorgesehen, können in einer weiteren bevorzugten Ausgestaltung zwei Bügel innerhalb der Buchse als Gegenlager vorgesehen sein, die darin quer sowie zu beiden Seiten zur Längsachse der Buchse angeordnet sind. Die Bügel können wahlweise federelastisch ausgebildet und/oder federnd gelagert sein. Ist der Bolzen zwischen die federnd gelagerten bzw. federelastischen Bügel innerhalb der Buchse eingesetzt, wird er von gegenüberliegenden Seiten innerhalb der Buchse gehalten und ist somit optimal gegen ein axiales Herausrutschen aus der Buchse gesichert. Gerade bei einer solchen Ausführungsform, aber nicht nur dann, ist es von Vorteil, wenn sich der Bolzen an seinem in die Buchse einzusteckenden Ende insbesondere in einem Winkel von etwa 45° verjüngt. Er kann dann mit seinem Ende zwischen die federnd gelagerten bzw. federelastischen Bügel eingedrückt werden, wodurch sich die Bügel auseinander schieben und bei Erreichen der Endposition in der zumindest teilweise umlaufenden Nut im Bolzen einrasten. Grundsätzlich ist es im Übrigen auch möglich, lediglich einen federelastisch ausgebildeten oder federnd gelagerten Bügel in der Buchse vorzusehen, der nur von einer Seite in die Nut eingreift und dann den Bolzen ähnlich wie ein Sicherungsstift gegen ein axiales Herausrutschen oder Verrutschen sichert.

Ist in der Buchse innenseitig eine umlaufende Nut vorgesehen, können am Bolzen beispielsweise Sperrkugeln vorgesehen sein, die, sobald sie bei Einschieben des Bolzens in die Buchse die umlaufende Nut erreichen, in diese eingreifen und damit den Bolzen gegen ein Herausrutschen aus der Buchse sichern. Dieses Wirkprinzip lässt sich auch umgekehrt mit Nut im Bolzen und federnd gelagerten Sperrkugeln in der Buchse verwirklichen.

In einer anderen bevorzugten Ausbildung können die Verriegelungsmittel buchsenseitig ein vorgespanntes Rastelement aufweisen, das ausgelöst wird, sobald der Bolzen in die Buchse eingesetzt ist. Das Rastelement kann beispielsweise ein Bügel sein, der zunächst den Weg zum Einsetzen des Bolzens in die Buchse frei gibt und dann nach Auslösen den Bolzen umgreift, ähnlich wie der Riegel eines Kofferraumschlosses eines PKWs. In einem solchen Fall kann es zudem vorteilhaft sein, wenn der Bolzen an seinem Ende statt einer Nut eine Schulter aufweist, die in eine entsprechende Ausnehmung in der Buchse eingreift. In diesem Fall ist die Buchse so auszugestalten, dass die Bolzen quer zur Längsachse der Buchse in diese eingesetzt werden kann.

Insbesondere dann, wenn der Bolzen ortsfest mit dem Fahrzeug verbunden ist, ist die Buchse an mindestens einer ihrer Stirnseiten zumindest teilweise offen, damit der Bolzen in die Buchse eingesetzt werden kann. Dabei wird der Bolzen vorzugsweise axial in die Buchse eingesetzt. Je nach Ausführungsform der Kupplung kann es aber ebenso bevorzugt sein, wenn die Buchse eine seitliche Ausnehmung aufweist, durch die der Bolzen quer zur Längsachse der Buchse in diese einsetzbar ist. Wenn die Buchse ortsfest mit dem Fahrzeug verbunden ist, kann auf eine stirnseitige Öffnung der Buchse verzichtet werden, wenn der Bolzen nicht stirnseitig, sondern an seiner Mantelfläche mit der Deichsel verbunden ist und die Verriegelungsmittel dergestalt sind, dass sie den Bolzen sicher gegen ein Herausrutschen aus der seitlichen Öffnung der Buchse halten.

Natürlich weist das deichselseitige Kupplungsteil vorzugsweise ein oder mehrere weitere Gelenkmittel auf, so dass der Freiheitsgrad der Kupplung größer 1 ist. So kann beispielsweise ein mit dem deichselseitigen Kupplungsteil verbundenes und Insbesondere daran angeordnetes erstes nachfolgendes Drehgelenk vorgesehen sein, dessen Drehachse im Wesentlichen orthogonal zur Längsachse des Bolzens verläuft. In einer vereinfachten Bauweise ist dieses erste nachfolgende Drehgelenk so ausgestaltet, dass die in ihm enthaltene Buchse zur Aufnahme des Bolzens seitensymmetrisch aufgebaut ist, indem der Verriegelungsbolzen mittig in der Buchse angeordnet ist. In Ergänzung hierzu kann ein weiteres mit der Buchse verbundenes, insbesondere am ersten nachfolgenden Drehgelenk angrenzendes zweites nachfolgendes Drehgelenk vorgesehen sein, dessen Drehachse orthogonal zu der des ersten nachfolgenden Drehgelenks und der Längsachse des Bolzens verläuft. Dabei ergibt sich eine besonders kompakte Bauform, wenn die Drehachse des ersten nachfolgenden Drehgelenks die Längsachse des Bolzens schneidet.

Alternativ oder in Ergänzung zu dem einen oder den mehreren beschriebenen nachfolgenden Drehgelenken des deichselseitigen Kupplungsteils kann ein quer zur Längsachse der Kupplungsteile angeordnetes elastisches oder federelastisches Verbindungselement zwischen Deichsel und deichselseitigem Kupplungsteil, insbesondere eine Spiralfeder und/oder ein Elastomergelenk vorgesehen sein.

In noch einer bevorzugten Ausgestaltung weist die erfindungsgemäße Kupplung ein Gehäuse auf, in das die Buchse eingesetzt ist und an dem das erste nachfolgende Drehgelenk und/oder das Verbindungselement ausgebildet sind.

Erfindungsgemäß ist im Gehäuse ein abschließbares Schloss zum Blockieren des Entriegelungsmittels oder als Verriegelungsmittel zum Sichern beider Kupplungsteile im Gehäuse als Diebstahlschutz vorgesehen sein.

Um eine äußerst einfache Bedienung der erfindungsgemäßen Kupplung zu gewährleisten, weisen die Entriegelungsmittel mindestens einen Betätigungsknopf auf, mit dem die automatisch eingerasteten Verriegelungsmittel, insbesondere durch eine einmalige Betätigung, voneinander gelöst werden, so dass die Kupplungsmittel voneinander getrennt werden können. Hier ist beispielsweise ein Mechanismus verwendbar, bei dem durch Betätigen des Druckknopfes ein oder mehrere Stifte in die Verriegelungsmittel eingreifen und sie entgegen ihrer Wirkrichtung bewegen, so dass der Bolzen in der Buchse wieder freigegeben wird.

Die erfindungsgemäße Kupplung ist insbesondere zum Anhängen von Fahrradanhängern an Fahrräder, auch solche mit (elektrischem) Hilfsantrieb, geeignet. Bevorzugt sind die beiden voneinander lösbaren Kupplungsteile wahlweise parallel zur Längsachse einer hinteren Radnabe des Fahrzeugs oder fluchtend mit der Längsachse dieser Radnabe angeordnet.

Im Folgenden wird die Erfindung anhand von Figuren, in denen verschiedene bevorzugte Ausführungsbeispiele der Erfindung ganz oder teilweise dargestellt sind, näher erläutert. Es zeigen:
- Fig. 1: eine Deichsel mit einer an einem ihrer Enden angeordneten, nicht beanspruchten Kupplung mit einer symmetrisch ausgeführten Buchse in perspektivischer Ansicht;
- Fig. 2: die Kupplung der in Figur 1 dargestellten Deichsel in anderer perspektivischer Ansicht;
- Fig. 3: die in den Figuren 1 und 2 dargestellte Kupplung ohne Gehäusemantel in weiterer perspektivischer Ansicht;
- Fig. 4: die Kupplung in der in Figur 3 gezeigten perspektivischen Ansicht mit transparenter Darstellung des Mantels eines Folgegelenks;
- Fig. 5: eine Ausführungsform der erfindungsgemäßen Kupplung mit einem die Buchse aufnehmenden Gehäuse in perspektivischer Ansicht;
- Fig. 6: eine andere perspektivische Ansicht der in Figur 5 dargestellten erfindungsgemäßen Kupplung;
- Fig. 7: eine dritte perspektivische Ansicht der in Figur 5 dargestellten Ausführungsform ohne Gehäusemantel;
- Fig. 8a: eine perspektivische Ansicht der in den Figuren 5 bis 7 dargestellten Buchse ohne umgebenden Gehäusemantel;
- Fig. 8b: eine Teilansicht des in den Figuren 7 und 8a dargestellten Verriegelungsmechanismus; und
- Fig. 9: eine weitere Teilansicht der in den Figuren 5 bis 8 dargestellten Ausführungsform.

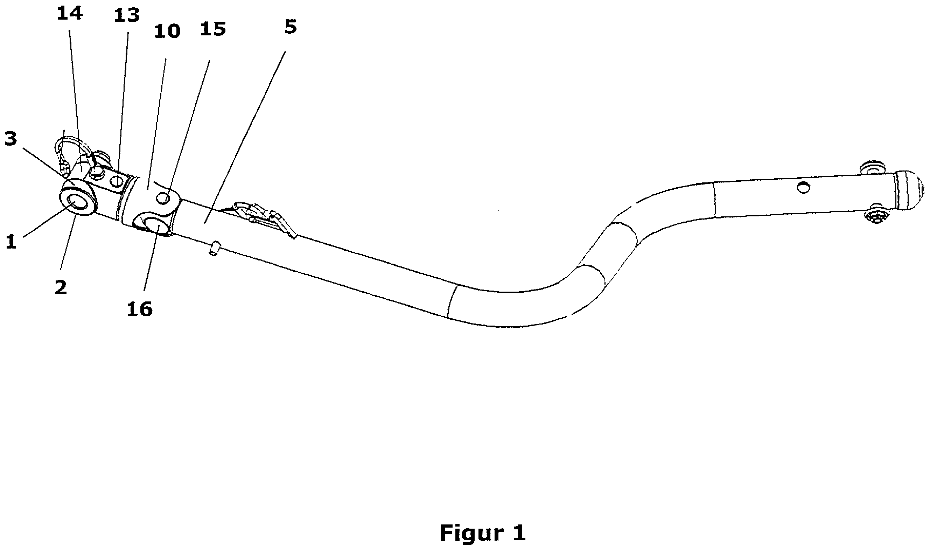

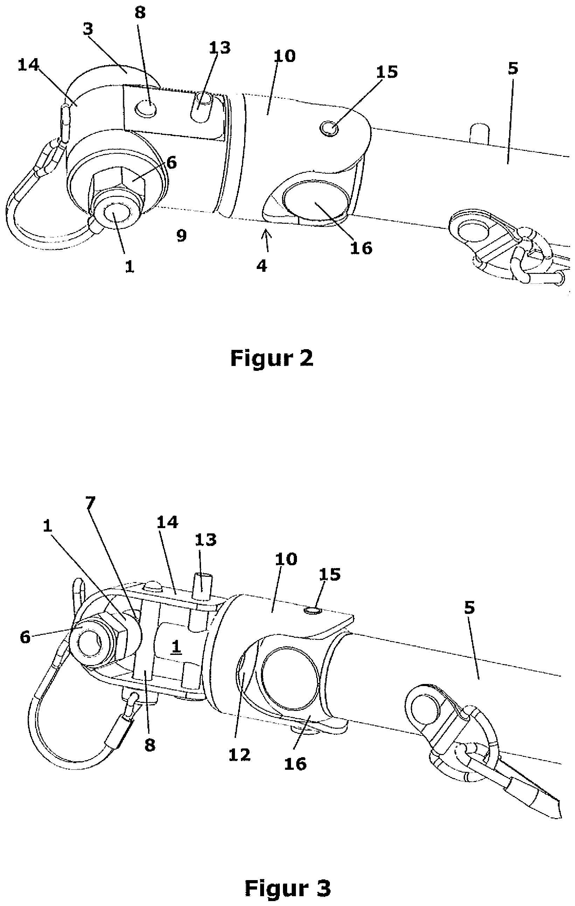

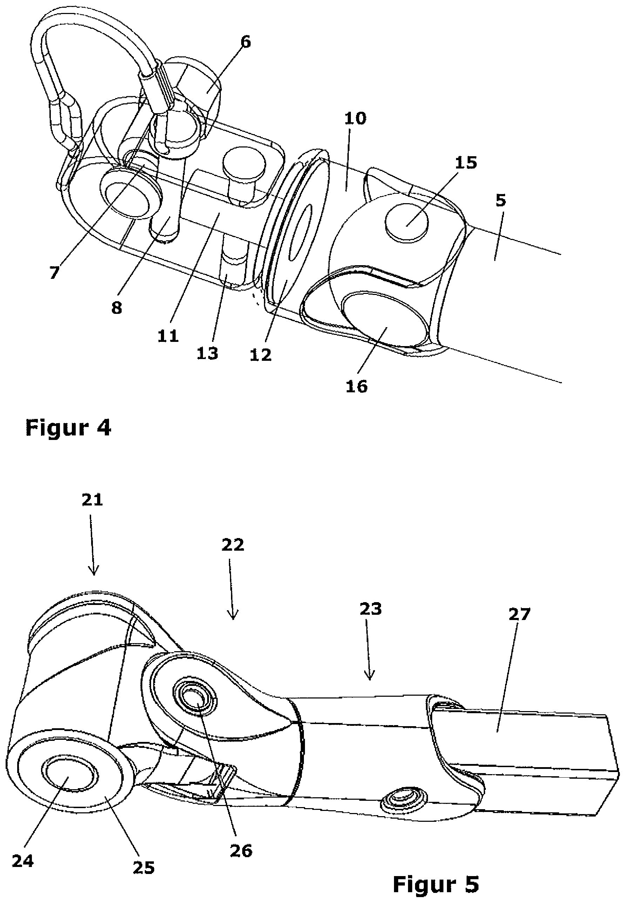

Die Figuren 1 bis 4 zeigen eine erste, konstruktiv einfache Ausführungsform einer nicht beanspruchten Kupplung. Während Figur 1 eine Gesamtansicht einer Deichsel mit einer an ihrem Kopf angeordneten Kupplung in einer Perspektive zeigt, zeigt Figur 2 den symmetrisch aufgebauten Kopf der Deichsel mit der Kupplung in anderer Perspektive. Figur 3 zeigt den Deichselkopf samt Kupplung in einer weiteren Perspektive, wobei das Gehäuse der Kupplung nicht dargestellt ist, um die Anordnung und Ausgestaltung der Freiheitsgrade bzw. der zu ihrer Realisierung erforderlichen Drehgelenke besser darstellen zu können. Schließlich zeigt Figur 4 den Deichselkopf samt Kupplung in noch einer anderen Perspektive. Hierin wurde zur besseren Darstellung des Aufbaus der Kupplung nur das Gehäuse weggelassen und der Mantel eines Folgegelenks der Kupplung transparent dargestellt.

Die Ausführungsform weist einen fahrzeugseitigen, im Wesentlichen rotationssymmetrischen Bolzen 1 auf, der in einer deichselseitigen Buchse 2 sitzt. Die Buchse 2 ist Bestandteil eines Gehäuses 3. Am Gehäuse schließt sich quer zur Längsachse des Bolzens 1 eine kardanisch wirkende Gelenkkombination 4 an, über die das Gehäuse 3 mit der Deichsel 5 verbunden ist.

Buchse 2 und Bolzen 1 bilden ein Drehgelenk, dessen Drehachse vorzugsweise fluchtend zu einer hinteren Radachse des Fahrzeugs angeordnet wird und damit in der Horizontalen verläuft. Die Drehachsen der sich am Gehäuse anschließenden Gelenkkombination 4 verlaufen zueinander und zur Längsachse der Buchse 2 orthogonal, so dass der Freiheitsgrad der Kupplung drei ist.

Wie insbesondere in den Figuren 2 bis 4 zu sehen ist, ist der Bolzen 1 an seinem dem Fahrzeug zugewandten Ende als Mutter 6 ausgebildet. Damit wird der Bolzen 1 auf das Ende einer Achse eines hinteren Rades eines Fahrzeugs, insbesondere auf die Hinterradachse eines Fahrrads, aufgeschraubt und kann sogar eine herkömmliche Radmutter ersetzen.

In einem zentralen Bereich des Bolzens 1 ist eine umlaufende Nut 7 vorgesehen. In diese Nut greift ein Sicherungsstift 8 ein, der in das Gehäuse 3 lösbar eingesteckt ist und den Bolzen 1 gegen ein axiales Verschieben sichert. Zum Einstecken des Sicherungsstiftes sind im Gehäuse miteinander fluchtende Bohrungen vorgesehen, und die Buchse 2 weist im Bereich des Eingriffs des Sicherungsstiftes 8 in die Nut 7 des Bolzens 1 eine Öffnung auf. Der Kopf des Sicherungsstiftes 8 ist mit einem Band am Gehäuse 3 befestigt.

Der Sicherungsstift 8 ist in einem sich quer zur Längsachse des Bolzens 1 erstreckenden Teils 9 des Gehäuses 3 gehalten. Das stirnseitige Ende dieses Gehäuseteils 9 ist als Lochscheibe ausgebildet, ebenso wie die daran anliegende Stirnseite eines sich anschließenden Mantelteils 10 für die Gelenkkombination 4. Durch die Lochscheiben greift ein weiterer Bolzen 11, an dessen einem Ende eine Scheibe 12a angeordnet ist, die an der Innenseite der Lochscheibe des Mantelteils 10 anliegt. Der Bolzen 11 ist im Gehäuse 3 durch einen darin eingelassenen Stift 13, der durch den Bolzen 11 hindurch gesteckt ist, gesichert. Mit dieser Anordnung liegt das Mantelteil 10 an dem Gehäuse 3 an und ist gegenüber dem Gehäuse 3 um eine durch den Bolzen 11 definierte Rotationsachse drehbar, so dass die Kupplung hierdurch einen zweiten Freiheitsgrad erhält. Die Rotationsachse des Mantelteils 10 verläuft orthogonal zur Längsachse des Bolzens 1 und schneidet diese.

Das Gehäuse 3, das überwiegend aus einem Kunststoff besteht, ist durch einen metallischen, U-förmigen Bügel 14 verstärkt, der den die Buchse 2 aufnehmenden Gehäuseteil und den sich seitlich anschließenden Gehäuseteil 9 einfasst und insbesondere die für den Sicherungsstift 8 und den Stift 13 vorgesehenen Bohrungen im Gehäuse verstärkt und die Stifte gegen ein Ausbrechen aus dem Gehäuse sichert.

Das Mantelteil 10 nimmt das Angelstück 15 eines weiteren Drehgelenks auf, dessen Gegenstück vom Deichselkopf 16 gebildet wird. Die Drehachse des Angelstücks 15 verläuft orthogonal zur Längsachse des Bolzens 1 und zur durch den Bolzen 11 definierte Rotationsachse. Damit hat die Kupplung einen dritten Freiheitsgrad.

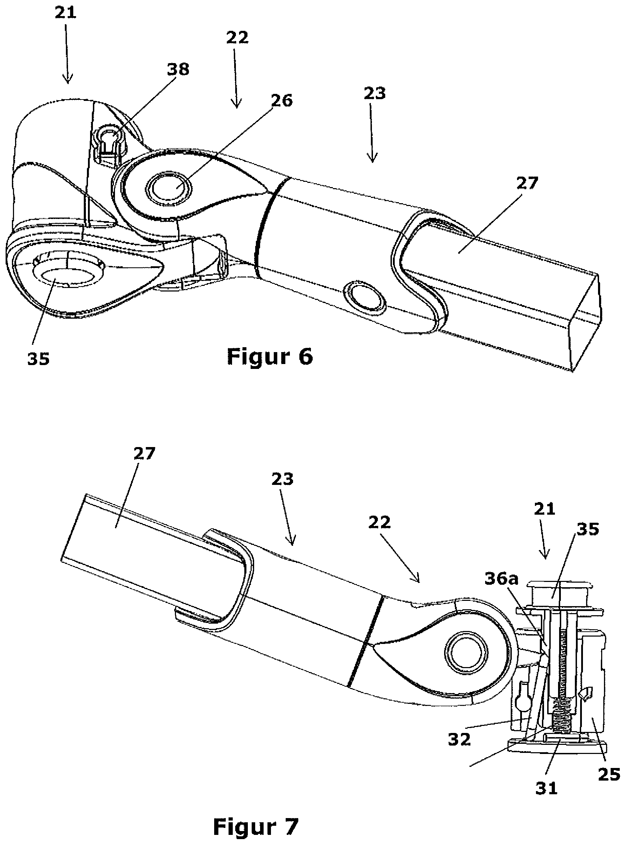

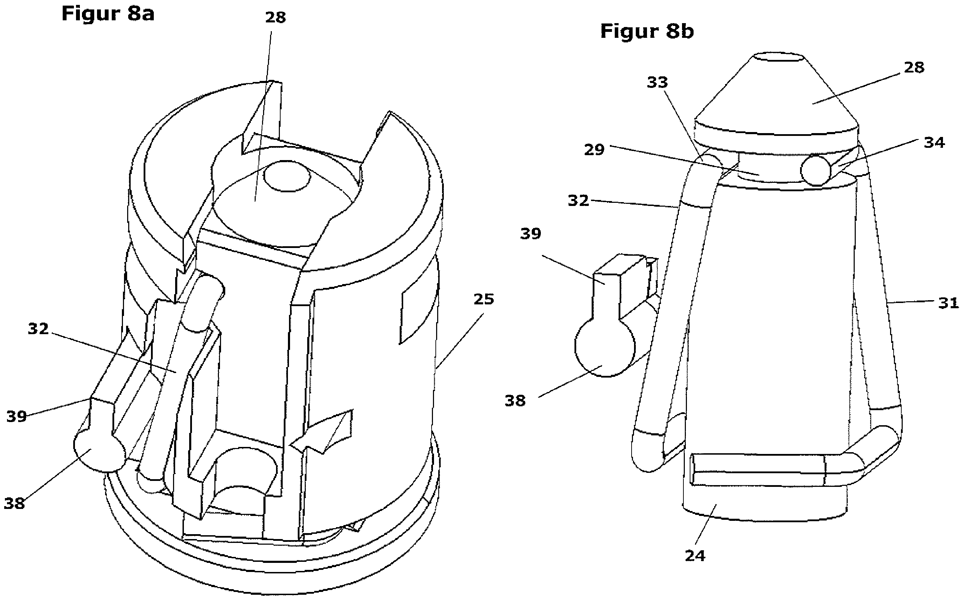

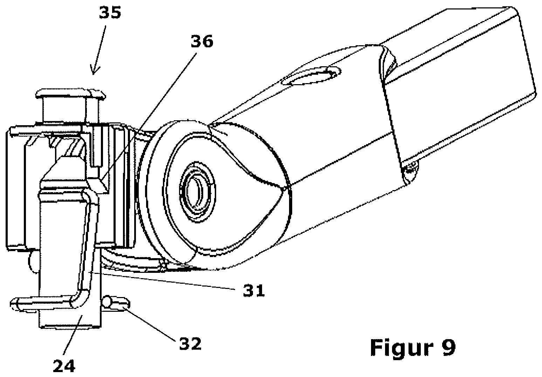

Die in den Figuren 5 bis 9 dargestellte Ausführungsform einer erfindungsgemäßen Kupplung ist im konstruktiven Aufbau gegenüber der in den Figuren 1 bis 4 dargestellten Kupplung aufwändiger, dafür aber in der Handhabung deutlich vereinfacht. Die Figuren 5 und 6 zeigen verschiedene perspektivische Ansichten des Deichselkopfes samt erfindungsgemäßer Kupplung. Figur 7 zeigt eine weitere perspektivische Ansicht des Deichselkopfes samt Kupplung, allerdings ist hier das Gehäuse der Kupplung nicht dargestellt. Figur 8a zeigt die Buchse der in den Figuren 5 bis 7 dargestellten Kupplung mit einem darin eingesetzten Bolzen sowie einem Teil der Verriegelungsmittel, die den Bolzen in der Buchse sichern, und einem Teil eines Schlossriegels. Figur 8b entspricht der Darstellung der Figur 8a, allerdings ist hier die Buchse nicht dargestellt. Schließlich zeigt Figur 9 den Deichselkopf samt Kupplung der Figuren 5 bis 7, wobei zu Erläuterungszwecken das Gehäuse der Kupplung und die Buchse nicht dargestellt sind.

Die Kupplung dieser in den Figuren 5 bis 9 dargestellten zweiten Ausführungsform kann in drei Abschnitte unterteilt werden, einen Kupplungskopf 21, ein Zwischenstück 22 und einen Deichselkopf 23.

Der Kupplungskopf 21 nimmt einen am Fahrzeug befestigten Bolzen 24 in einer Buchse 25 auf, in der der Bolzen 24 drehbar gelagert ist. Kupplungskopf 21 und Zwischenstück 22 sind über einen Gelenkbolzen 26 miteinander verbunden, dessen Achse orthogonal zur Achse des Bolzens 24 angeordnet ist. Das Zwischenstück 22 und der Deichselkopf sind über einen weiteren (nicht dargestellten) Gelenkbolzen miteinander verbunden, der axial zum Deichselende 27 und orthogonal zum Gelenkbolzen 26 angeordnet ist. Damit ist der Freiheitsgrad der Kupplung drei.

Wie insbesondere in Figur 8b, zu sehen ist, weist der Bolzen 24 einen Bolzenkopf 28 auf, der als Kegelstumpf ausgebildet ist und sich in einem Winkel von 45° zur Spitze hin verjüngt. Hinter dem Bolzenkopf 28 weist der Bolzen eine umlaufende Nut 29 auf. Im Übrigen ist der dargestellte Teil des Bolzens 24 zylindrisch. Das fahrzeugseitige Ende des Bolzens ist in keiner der Figuren 5 bis 9 dargestellt. Es kann beispielsweise ebenso wie das des Bolzen 1 der in den Figuren 1 bis 4 dargestellten Ausführungsform als Mutter ausgebildet sein. Insbesondere kann der bevorzugt sechseckig ausgestaltete Montageansatz am fahrzeugseitigen Ende des Bolzens nochmals zylindrisch abgedreht sein, um damit eine Art Abstandshülse herzustellen.

Es sind automatisch einrastende Verriegelungsmittel zum Sichern des Bolzens 24 in der Buchse 25 vorgesehen. Wie insbesondere in den Figuren 8a und 8b zu sehen ist, umfassen die Verriegelungsmittel im Wesentlichen zwei an der Außenseite der Buchse 25 gelagerte Federklammern 31, 32 mit bügelartigen Enden 33, 34, die in hierfür vorgesehene Ausnehmungen der Buchse 25 an gegenüberliegenden Seiten von außen in die Buchse eingreifen, und zwar so weit, dass sie in die umlaufende Nut 29 des Bolzens 24 eingreifen können. Beim Einsetzen des Bolzens 24 in die Buchse 25 mit dem Bolzenkopf 28 voran werden die bügelartigen Enden 33, 34 der Federklammern 31, 32 durch den Kegelstumpf auseinandergedrückt und rasten dann automatisch in der umlaufenden Nut 29 ein, so dass der Bolzen 24 nicht mehr ohne Weiteres axial aus er Buchse 25 herausgezogen werden kann.

Zum Lösen der Kupplung sind Entriegelungsmittel vorgesehen. Die Entriegelungsmittel weisen einen im Kupplungskopf 21 axial zur Längsachse des Bolzens 24 geführten Druckknopf 35 auf, der entgegen einer Federkraft(Feder nicht dargestellt) betätigbar ist. Der Druckknopf weist zwei Entriegelungsfinger 36 auf, die auf die Federklammern 31, 32 wirken und diese bei Betätigung des Druckknopfes auseinanderdrücken, so dass ihre bügelartigen Enden 33, 34 die umlaufende Nut 29 des Bolzens 24 freigeben und der Bolzen 24 aus der Buchse 25 entfernt werden kann.

Des Weiteren weist diese Ausführungsform der erfindungsgemäßen Kupplung ein Schloss 38 auf, mit dessen Bügel 39 eine der Federklammern 31 gegen eine Entriegelung blockiert werden kann, wenn er sich in einer Schließstellung befindet, so dass die Kupplung nicht gelöst werden kann.

## Patentansprüche

1. Kupplung zum Verbinden eines mindestens eine Deichsel aufweisenden zweispurigen Anhängers mit einem nicht motorisierten Fahrzeug oder einem lediglich einen Hilfsantrieb aufweisenden Fahrzeug, insbesondere einem Fahrrad, mit zwei zusammenwirkenden und voneinander lösbaren Kupplungsteilen, von denen das eine ortsfest mit dem Fahrzeug und das andere mit der Deichsel zu verbinden ist, wobei die zusammenwirkenden Kupplungsteile einen Bolzen (1, 24) mit zylindrischer Mantelfläche sowie eine auf den Bolzen (1, 24) aufsteckbare und den Bolzen (1, 24) zumindest teilweise umgreifende Buchse (2, 25) oder Bolzenführung aufweisen, wobei die Buchse (2, 25) oder Bolzenführung mindestens eine Öffnung zum Einsetzen des Bolzens (1, 24) aufweist und die miteinander verbundenen Kupplungsteile um ihre gemeinsame Längsachse herum relativ zueinander drehbar sind und als Drehgelenk mit einem Freiheitsgrad wirken, wobei die Kupplungsteile Verriegelungsmittel aufweisen, mit denen die Kupplungsteile sicher miteinander verbunden werden können, wobei deichselseitig ein oder mehrere weitere Gelenke vorgesehen sind, durch welche die Kupplung mindestens einen weiteren Freiheitsgrad erhält, und wobei
a. die Verriegelungsmittel so ausgebildet sind, dass sie beim Aufstecken der Buchse (25) auf den Bolzen (24) automatisch einrasten und die Kupplungsteile sicher miteinander verbinden, und Entriegelungsmittel vorgesehen sind, um die Verriegelungsmittel zu entriegeln, so dass die Kupplungsteile voneinander gelöst werden können, und/oder
b. eines der Kupplungsteile mindestens eine zumindest teilweise umlaufende Schulter oder Nut (7,29), die mindestens eine erste axial wirkende Lagerfläche bildet, aufweist, und dass am anderen Kupplungsteil ein mit der ersten axial wirkenden Lagerfläche zusammenwirkendes Gegenlager vorgesehen ist, wobei das Gegenlager von dem Verriegelungsmittel gebildet wird,
**gekennzeichnet, durch** ein abschließbares Schloss (38) als Verriegelungsmittel oder zum Blockieren des Entriegelungsmittels.

2. Kupplung nach Anspruch 1, bei der das eine der Kupplungsteile mindestens eine zumindest teilweise umlaufende Schulter oder Nut (7, 29), die mindestens eine erste axial wirkende Lagerfläche bildet, aufweist und am anderen Kupplungsteil ein mit der ersten axial wirkenden Lagerfläche zusammenwirkendes Gegenlager vorgesehen ist, wobei das Gegenlager von dem Verriegelungsmittel gebildet wird, **dadurch gekennzeichnet, dass**
- das Verriegelungsmittel mindestens zwei axial wirkende Gegenlagerflächen bildet und eine Bewegung des Bolzens in der Buchse in beide axiale Richtungen sperrt, und/oder
- die Lagerflächen innerhalb der Buchse (2, 25) oder Bolzenführung liegen, wenn der Bolzen (1, 24) in die Buchse (2, 25) eingesteckt ist.

3. Kupplung nach Anspruch 2, **gekennzeichnet durch** eine Führung in der Buchse für einen Sicherungsstift (8) derart, dass der in der Führung sitzende Sicherungsstift (8) in die Nut (7) des in die Buchse (2) eingesetzten Bolzens (1) eingreift und ihn als Gegenlager gegen ein axiales Herausrutschen aus der Buchse sichert.

4. Kupplung nach Anspruch 1 oder 2, **dadurch gekennzeichnet, dass** die Verriegelungsmittel so ausgebildet sind, dass sie beim Aufstecken der Buchse (25) auf den Bolzen (24) automatisch einrasten und die Kupplungsteile sicher miteinander verbinden, und dass Entriegelungsmittel vorgesehen sind, um die Verriegelungsmittel zu entriegeln, so dass die Kupplungsteile voneinander gelöst werden können, wobei vorzugsweise die Entriegelungsmittel mindestens einen Betätigungsknopf (35) aufweisen, mit dem die eingerasteten Verriegelungsmittel insbesondere durch eine einmalige Betätigung voneinander gelöst werden, so dass die Kupplungsmittel voneinander getrennt werden können.

5. Kupplung nach Anspruch 2 oder 4, **dadurch gekennzeichnet, dass** das Gegenlager ein federelastisches Element und/oder federnd gelagert ist und als Verriegelungsmittel wirkt, wobei insbesondere bevorzugt federnd gelagerte Rastnasen und/oder zwei parallele, in der Buchse quer sowie zu beiden Seiten zu ihrer Längsachse angeordnete, federelastisch ausgebildete und/oder federnd gelagerte Bügel (33, 34) als Gegenlager vorgesehen sind.

6. Kupplung nach einem der vorstehenden Ansprüche, **dadurch gekennzeichnet, dass** sich der Bolzen (24) an seinem in die Buchse (25) einzusteckenden Ende (28) insbesondere in einem Winkel von etwa 45° verjüngt, und/oder dass die Verriegelungsmittel buchsenseitig ein vorgespanntes Rastelement aufweisen, das ausgelöst wird, sobald der Bolzen in die Buchse eingesetzt ist.

7. Kupplung nach einem der vorstehenden Ansprüche, **gekennzeichnet durch** eine seitliche Ausnehmung in der Buchse, durch die der Bolzen quer zur Längsachse der Buchse in diese einsetzbar ist.

8. Kupplung nach einem der vorstehenden Ansprüche, **dadurch gekennzeichnet, dass** das fahrzeugseitige Kupplungsteil axial zur Achse einer Radnabe oder parallel hierzu anzuordnen ist, wobei vorzugsweise
- das fahrzeugseitige Kupplungsteil Mittel zu seiner Befestigung am Ende der Radnabe oder mit einer am Fahrzeug gegengelagerten Verbindungsschraube aufweist, wobei darüber hinaus bevorzugt die Buchse (2) oder der Bolzen (1) in Richtung seiner Längsachse eine Bohrung mit einem Gewinde aufweist, mit dem sie/er auf das Ende der Radnabe oder die Verbindungsschraube aufgeschraubt werden kann, und/oder
- der auf die Radnabe aufzuschraubende Kupplungsteil gleichzeitig die Funktion einer Radmutter erfüllt.

9. Kupplung nach einem der vorstehenden Ansprüche, **dadurch gekennzeichnet, dass**
- die Buchse den Bolzen spielfrei umgreift und/oder
- das fahrzeugseitige Kupplungsteil der Bolzen (1, 24) ist, welcher an seinem zum Fahrzeug weisenden Ende einen Ansatz als Abstandshalter aufweist, der vorzugsweise zylindrisch ausgebildet ist, und/oder
- der Bolzen im Wesentlichen zylindrisch ist und mindestens zwei jeweils zu einander parallele und in den Zylinder eingearbeitete Flächen zum Ansetzen eines Werkzeuges aufweist.

10. Kupplung nach Anspruch 7 oder einem der darauf rückbezogenen Ansprüche 8 oder 9, **dadurch gekennzeichnet, dass** der Bolzen an seiner dem Fahrzeug abgewandten Stirnfläche eine Schulter aufweist, wobei die Schulter mindestens zwei jeweils zu einander parallele eingearbeitete Flächen zum Ansetzen eines Werkzeuges aufweist.

11. Kupplung nach einem der vorstehenden Ansprüche, **gekennzeichnet durch** ein mit der Buchse verbundenes und insbesondere daran angeordnetes erstes nachfolgendes Drehgelenk, dessen Drehachse im Wesentlichen orthogonal zur Längsachse des Bolzens verläuft.

12. Kupplung nach Anspruch 11, **gekennzeichnet durch**
- ein weiteres mit der Buchse verbundenes, insbesondere am ersten nachfolgenden Drehgelenk angrenzendes zweites nachfolgendes Drehgelenk, dessen Drehachse orthogonal zu der des ersten Drehgelenks und der Längsachse des Bolzens verläuft, wobei vorzugsweise die Drehachse des ersten nachfolgenden Drehgelenks die Längsachse des Bolzens schneidet, und/oder
- ein quer zur Längsachse der Kupplungsteile angeordnetes elastisches Verbindungselement zwischen Deichsel und deichselseitigem Kupplungsteil, insbesondere eine Spiralfeder und/oder einem Elastomergelenk.

13. Kupplung nach Anspruch 12, **gekennzeichnet durch** ein Gehäuse (3), in das die Buchse (2, 25) eingesetzt ist und an dem das erste nachfolgende Drehgelenk und/oder das Verbindungselement ausgebildet ist.

14. System aus Fahrzeug und einem eine Deichsel aufweisenden Fahrzeuganhänger mit einer Kupplung zur Verbindung der Deichsel mit dem Fahrzeug gemäß einem der vorstehenden Ansprüche, wobei vorzugsweise die Längsachse der zusammenwirkenden Kupplungsteile parallel zu einer Fahrzeugradachse oder hiermit fluchtend angeordnet ist.

## Claims

1. Coupling for connecting a two-track trailer having at least one drawbar to a non-motorized vehicle or a vehicle having only an auxiliary drive, in particular a bicycle, with two interacting coupling parts which can be released from each other, of which one is to be connected in a stationary manner to the vehicle and the other to the drawbar, the interacting coupling parts comprising a bolt (1, 24) with a cylindrical outer surface and a bushing (2) or bolt guide which can be attached to the bolt (1, 24) and which at least partially encompasses the bolt (1, 24), wherein the bushing (2, 25) or bolt guide has at least one opening for insertion of the bolt (1, 24) and the coupling parts connected to one another can be rotated relative to one another about their common longitudinal axis and act as a rotary joint with one degree of freedom, wherein the coupling parts have locking means with which the coupling parts can be securely connected to one another, wherein one or more further joints are provided on the drawbar side by means of which the coupling is given at least one further degree of freedom, and wherein
a. the locking means are designed to automatically engage and securely connect the coupling parts when the bushing (25) is placed on the bolt (24), and unlocking means are provided to unlock the locking means so that the coupling parts can be released from each other, and/or
b. one of the coupling parts has at least one at least partially circumferential shoulder or groove (7, 29), which forms at least one first axially acting bearing surface, and that on the other coupling part an abutment is provided which cooperates with the first axially acting bearing surface, the abutment being formed by the locking means,
**characterised by** a lockable lock (38) as locking means or for blocking the unlocking means.

2. Coupling according to claim 1, in which one of the coupling parts has at least one at least partially circumferential shoulder or groove (7, 29) which forms at least one first axially acting bearing surface, and on the other coupling part an abutment is provided which cooperates with the first axially acting bearing surface, the abutment being formed by the locking means, **characterised in that**
the locking means forms at least two axially acting counter bearing surfaces and blocks movement of the bolt in the bushing in both axial directions, and/or
the bearing surfaces lie within the bushing (2, 25) or bolt guide when the bolt (1, 24) is inserted into the bushing (2, 25).

3. Coupling according to claim 2, **characterized by** a guide in the bushing for a locking pin (8) in such a way that the locking pin (8) located in the guide engages in the groove (7) of the bolt (1) inserted into the bushing (2) and secures it as a counter bearing against axial slipping out of the bushing.

4. Coupling according to claim 1 or 2, **characterized in that** the locking means are designed in such a way that they automatically engage when the bushing (25) is pushed onto the bolt (24) and securely connect the coupling parts to one another, and **in that** unlocking means are provided to unlock the locking means so that the coupling parts can be released from one another, preferably the unlocking means having at least one actuating button (35) with which the engaged locking means are released from one another, in particular by a single actuation, so that the coupling parts can be separated from one another.

5. Coupling according to claim 2 or 4, **characterized in that** the counter bearing is a resilient element and/or resiliently mounted and acts as a locking means, wherein in particular latches, which are preferably resiliently mounted, and/or two parallel brackets (33, 34), which are arranged in the bushing transversely and on both sides of its longitudinal axis and are resiliently formed and/or resiliently mounted, are provided as counter bearings.

6. Coupling according to one of the above claims, **characterised in that** the bolt (24) tapers at its end (28) to be inserted into the bushing (25), in particular at an angle of about 45°, and/or that the locking means on the bushing side comprise a pretensioned latching element which is released as soon as the bolt is inserted into the bushing.

7. Coupling according to one of the above claims, **characterised by** a lateral recess in the bushing, through which the bolt can be inserted into the bushing transversely to the longitudinal axis of the bushing.

8. Coupling according to one of the preceding claims, **characterized in that** the vehicle-side coupling part is to be arranged axially to the axis of a wheel hub or parallel thereto, wherein preferably
- the vehicle-side coupling part has means for its attachment to the end of the wheel hub or to a connecting bolt mounted against the vehicle, wherein, in addition, the bushing (2) or the bolt (1) preferably has a bore with a thread in the direction of its longitudinal axis, by means of which it/they can be screwed onto the end of the wheel hub or the connecting bolt, and/or
- the coupling part to be screwed onto the wheel hub simultaneously fulfils the function of a wheel nut.

9. Coupling according to one of the above claims, **characterised in that**
- the bushing grips the bolt without play and/or
- the vehicle-side coupling part is the bolt (1, 24), which has a projection as a spacer at its end facing the vehicle, which is preferably cylindrical, and/or
- the bolt is substantially cylindrical and has at least two surfaces, each parallel to the other and worked into the cylinder, for the attachment of a tool.

10. Coupling according to claim 7 or one of claims 8 or 9 referred back to it, **characterized in that** the bolt has a shoulder on its end face facing away from the vehicle, the shoulder having at least two surfaces, each parallel to the other, for the attachment of a tool.

11. Coupling according to one of the preceding claims, **characterised by** a first subsequent rotary joint connected to the bushing and in particular arranged thereon, the axis of rotation of which is substantially orthogonal to the longitudinal axis of the bolt.

12. Coupling according to claim 11, **characterized by**
- a second subsequent rotary joint connected to the bushing, in particular adjoining the first subsequent rotary joint, the axis of rotation of which is orthogonal to that of the first rotary joint and the longitudinal axis of the bolt, the axis of rotation of the first subsequent rotary joint preferably intersecting the longitudinal axis of the bolt, and/or
- an elastic connecting element arranged transversely to the longitudinal axis of the coupling parts between the drawbar and the drawbar-side coupling part, in particular a spiral spring and/or an elastomeric joint.

13. Coupling according to claim 12, **characterized by** a housing (3) into which the bushing (2, 25) is inserted and on which the first subsequent rotary joint and/or the connecting element is formed

14. System consisting of a vehicle and a vehicle trailer having a drawbar, with a coupling for connecting the drawbar to the vehicle in accordance with one of the above claims, wherein preferably the longitudinal axis of the interacting coupling parts is arranged parallel to a vehicle wheel axis or aligned therewith.

## Revendications

1. Attelage destiné à relier une remorque à deux roues sur essieu comprenant au moins un timon à un véhicule non motorisé ou à un véhicule présentant seulement un entraînement auxiliaire, en particulier une bicyclette, avec deux parties d'attelage entrant en coopération et pouvant être détachées l'une de l'autre, parmi lesquelles l'une est à fixer à demeure au véhicule et l'autre à relier au timon, dans lequel les parties d'attelage entrant en coopération présentent un boulon (1, 24) présentant une surface cylindrique et une douille (2, 25) ou un guidage de boulon pouvant être enfiché(e) sur le boulon (1, 24) et entourant au moins en partie le boulon (1, 24), dans lequel la douille (2, 25) ou le guidage de boulon présente au moins une ouverture pour l'insertion du boulon (1, 24) et les parties d'attelage reliées l'une à l'autre peuvent être amenées à tourner l'une par rapport à l'autre autour de leur axe longitudinal commun et agissent comme une articulation rotoïde présentant un degré de liberté, dans lequel les parties d'attelage comportent des moyens de verrouillage par l'intermédiaire desquels les parties d'attelage peuvent être reliées solidement l'une à l'autre, dans lequel une ou plusieurs autres articulations sont prévues côté timon, par l'intermédiaire desquelles l'attelage reçoit au moins un autre degré de liberté, et dans lequel
a. les moyens de verrouillage sont agencés de telle manière qu'ils s'encliquètent automatiquement lors de l'enfichage de la douille (25) sur le boulon (24) et relient solidement entre elles les parties d'attelage, et il est prévu des moyens de déverrouillage pour déverrouiller les moyens de verrouillage, de sorte que les parties d'attelage peuvent être séparées l'une de l'autre, et/ou
b. l'une des parties d'attelage présente au moins un épaulement ou rainure (7, 29) au moins en partie périphérique, qui forme au moins une première surface d'appui agissant axialement, et en ce qu'il est prévu sur l'autre partie d'attelage un contre-appui coopérant avec la première surface d'appui agissant axialement, dans lequel le contre-appui est formé par le moyen de verrouillage,
**caractérisé par** une serrure (38) pouvant être fermée faisant office de moyen de verrouillage ou destinée au blocage du moyen de déverrouillage.

2. Attelage selon la revendication 1, dans lequel l'une des parties d'attelage présente au moins un épaulement ou rainure (7, 29) au moins en partie périphérique, qui forme au moins une première surface d'appui agissant axialement, et il est prévu sur l'autre partie d'attelage un contre-appui coopérant avec la première surface d'appui agissant axialement, dans lequel le contre-appui est formé par le moyen de verrouillage, **caractérisé en ce que**
- le moyen de verrouillage forme au moins deux surfaces de contre-appui agissant axialement et empêche un déplacement du boulon dans la douille dans les deux directions axiales, et/ou
- les surfaces d'appui sont situées à l'intérieur de la douille (2, 25) ou du guidage de boulon, quand le boulon (1, 24) est inséré dans la douille (2, 25).

3. Attelage selon la revendication 2, **caractérisé par** un guidage dans la douille pour une broche de blocage (8), de telle manière que la broche de blocage (8) reposant dans le guidage s'engage dans la rainure (7) du boulon (1) inséré dans la douille (2) et bloque ce dernier en tant que contre-appui pour l'empêcher de s'extraire axialement de la douille en glissant.

4. Attelage selon la revendication 1 ou 2, **caractérisé en ce que** les moyens de verrouillage sont agencés de telle manière que, lors de l'enfichage de la douille (25) sur le boulon (24) ils s'encliquètent automatiquement et relient solidement les parties d'attelage l'une à l'autre, et **en ce que** des moyens de déverrouillage sont prévus afin de déverrouiller les moyens de verrouillage, de sorte que les parties d'attelage peuvent être détachées l'une de l'autre, dans lequel les moyens de verrouillage présentent de préférence au moins une tête d'actionnement (35) par l'intermédiaire de laquelle les moyens de verrouillage encliquetés sont détachés les uns des autres en particulier à la suite d'un seul actionnement, de sorte que les moyens d'attelage peuvent être séparés les uns des autres.

5. Attelage selon la revendication 2 ou 4, **caractérisé en ce que** le contre-appui est un élément à élasticité de ressort et/ou est monté de manière élastique et agit comme un moyen de verrouillage, dans lequel il est prévu de manière particulièrement préférée des taquets d'encliquetage montés de manière élastique et/ou deux arceaux (33, 34) parallèles, à élasticité de ressort et/ou montés de manière élastique disposés dans la douille transversalement et des deux côtés par rapport à son axe longitudinal comme contre-appuis.

6. Attelage selon l'une des revendications précédentes, **caractérisé en ce que** le boulon (24) s'amincit à son extrémité (28) à introduire dans la douille (25) en particulier selon un angle de sensiblement 45°, et/ou **en ce que** les moyens de verrouillage présentent côté douille un élément d'encliquetage précontraint, qui est déclenché dès que le boulon est inséré dans la douille.

7. Attelage selon l'une des revendications précédentes, **caractérisé par** un évidement latéral dans la douille, par lequel le boulon peut être inséré dans la douille transversalement à l'axe longitudinal de celle-ci.

8. Attelage selon l'une des revendications précédentes, **caractérisé en ce que** la partie d'attelage côté véhicule est à agencer axialement par rapport à l'axe d'un moyeu de roue ou parallèlement à celui-ci, dans lequel de préférence
- la partie d'attelage côté véhicule présente des moyens pour sa fixation à l'extrémité du moyeu de roue ou avec une vis d'assemblage montée sur le véhicule, dans lequel de préférence encore la douille (2) ou le boulon (1) présente en direction de son axe longitudinal un trou pourvu d'un filet, au moyen duquel elle/il peut être vissé(e) sur l'extrémité du moyeu de roue ou la vis d'assemblage, et/ou
- la partie d'attelage à visser sur le moyeu de roue assure simultanément la fonction d'un écrou de roue.

9. Attelage selon l'une quelconque des revendications précédentes, **caractérisé en ce que**
- la douille entoure le boulon sans jeu et/ou
- la partie d'attelage côté véhicule est le boulon (1, 24), lequel présente à son extrémité tournée vers le véhicule une partie saillante faisant office d'élément d'écartement, qui est de préférence cylindrique, et/ou
- le boulon est sensiblement cylindrique et présente au moins deux surfaces respectivement parallèles l'une à l'autre et ménagées dans le cylindre pour la mise en place d'un outil.

10. Attelage selon la revendication 7 ou l'une des revendications 8 ou 9 dépendantes de celle-ci, **caractérisé en ce que** le boulon présente un épaulement sur sa surface frontale opposée au véhicule, dans lequel l'épaulement présente au moins deux surfaces ménagées parallèlement l'une à l'autre pour la mise en place d'un outil.

11. Attelage selon l'une quelconque des revendications précédentes, **caractérisé par** une première articulation rotoïde suivante reliée à la douille et agencée en particulier sur celle-ci, dont l'axe de rotation s'étend sensiblement perpendiculairement à l'axe longitudinal du boulon.

12. Attelage selon la revendication 11, **caractérisé par**
- une autre deuxième articulation rotoïde suivante qui est reliée à la douille et en particulier adjacente à la première articulation rotoïde suivante et dont l'axe de rotation s'étend perpendiculairement à celui de la première articulation rotoïde et de l'axe longitudinal du boulon, dans lequel de préférence l'axe de rotation de la première articulation rotoïde suivante coupe l'axe longitudinal du boulon, et/ou
- un élément de liaison élastique agencé transversalement à l'axe longitudinal des parties d'attelage entre le timon et la partie d'attelage côté timon, en particulier un ressort spiral et/ou une articulation élastomère.

13. Attelage selon la revendication 12, **caractérisé par** un logement (3), dans lequel la douille (2, 25) est insérée et sur lequel la première articulation rotoïde suivante et/ou l'élément de liaison est/sont formés.

14. Système composé d'un véhicule et d'une remorque de véhicule présentant un timon avec un attelage pour la liaison du timon au véhicule selon l'une quelconque des revendications précédentes, dans lequel de préférence l'axe longitudinal des parties d'attelage qui coopèrent est disposé parallèlement à un axe d'essieu du véhicule ou est en alignement avec celui-ci.
